# EUROPÄISCHE PATENTSCHRIFT

(11) **EP 2 994 327 B1**
(45) Veröffentlichungstag und Bekanntmachung des Hinweises auf die Patenterteilung: **19.06.2019**
(21) Anmeldenummer: 14713491.0
(22) Anmeldetag: 31.03.2014
(51) Int. Cl.: B60J 10/30, B60J 10/70

(54) **ABDICHTUNGSANORDNUNG ENTHALTEND EINE FAHRZEUGSCHEIBE**
SEALING ASSEMBLY COMRISING A VEHICLE GLASS PANE
AGENCEMENT D'ÉTANCHÉITÉ COMPREND UNE VITRE DE VÉHICULE

(30) Priorität: 30.04.2013 EP 13165908
(43) Veröffentlichungstag der Anmeldung: 16.03.2016
(73) Patentinhaber: Saint-Gobain Glass France, 92400 Courbevoie (FR)
(72) Erfinder: TIMMERMANN, Alwin, 50933 Köln (DE)
(74) Vertreter: Gebauer, Dieter Edmund
(86) Internationale Anmeldenummer: PCT/EP2014/056409
(87) Internationale Veröffentlichungsnummer: WO 2014/177329

(56) Entgegenhaltungen:
- EP-A1- 1 724 141
- EP-A1- 2 814 681
- EP-B1- 1 280 675
- WO-A1-2013/120671
- DE-A1-102008 050 130
- DE-U1-202008 006 986

## Beschreibung

Die Erfindung betrifft eine Abdichtungsanordnung, enthaltend eine Fahrzeugscheibe, ein Verfahren zu deren Herstellung und deren Verwendung.

Kraftfahrzeuge müssen in der Regel im Bereich zwischen der Fahrzeugwindschutzscheibe und der Motorkarosserie gegen Feuchtigkeit, Fahrtwind und eindringenden Schmutz geschützt werden. Dabei muss der Glaskörper der Windschutzscheibe gegenüber der Metallkarosserie abgedichtet werden. Im Übergangsbereich werden zudem vielfach Wasserkästen aus Kunststoff eingesetzt. Wasserkästen schützen im Fahrzeug spritzwassergefährdete Komponenten vor Feuchtigkeit. Die Wasserkastenabdeckung ermöglicht dabei ein Abfließen des sich an der Windschutzscheibe ansammelnden Wassers. Die Werkstoffe Glas, verschiedene Kunststoffe und Metall zeigen jedoch deutlich unterschiedliche Eigenschaften, die besondere Überlegungen bei der Abdichtung erforderlich machen. Um dennoch eine Abdichtung zu ermöglichen, insbesondere im kritischen Bereich des Wasserkastens, werden vielfach polymere Werkstoffe wie Gummidichtungen eingesetzt. Diese Aufgabe übernimmt in vielen Fällen die Wasserkastenabdichtung. Diese muss sowohl stabil, beständig als auch einfach zu montieren sein. Die Herstellung der Wasserkastenabdichtung erfolgt in der Regel durch Extrusionsverfahren, die Fixierung an den Baugruppen durch geeignete Klebstoffe und -Systeme.

DE 199 61 706 A1 offenbart eine Anordnung zum Verbinden einer fest eingebauten Windschutzscheibe mit einem Karosseriebauteil, insbesondere einem Wasserkasten. Die Anordnung umfasst einen an der Fahrzeugscheibe haftenden Profilstrang mit Lippe. Die Lippe weist auf ihrer Unterseite Mittel zum Verbinden mit einem Bauteil auf.

DE 10 2009 026 369 A1 offenbart eine Abdichtungsanordnung, enthaltend eine Fahrzeugscheibe. Diese umfasst eine Halteschiene und eine über eine Verbindungsstelle verbundene Abdeckung mit Rastschiene. Die Halteschiene umfasst einen Rastkanal, welcher mit einem Federschenkel und einem Stützkörper gebildet wird. Die Abdeckung ist mit der Rastschiene in dem Rastkanal eingerastet und ein Federelement ist zwischen der Anlagefläche der Abdeckung und dem Stützkörper angeordnet.

EP 1 280 675 B1 offenbart ebenfalls eine Abdichtungsanordnung, enthaltend eine Fahrzeugscheibe. Diese umfasst eine Abdeckung eines Wasserkastens und eine versenk-und anhebbare Anordnung eines Scheibenwischers.

Das nachveröffentlichte Dokument EP 2814681 B1 offenbart eine Abdichtungsanordnung, enthaltend eine Fahrzeugscheibe, bei der ein als einzelne Lippe ausgebildetes Federelement zwischen einer Anlagefläche an der Unterseite der Abdeckung und einer Führungsschiene eingespannt ist.

Damit eine hohe Dichtigkeit und Festigkeit der Abdichtungsanordnung erreicht werden kann, insbesondere eine passgenaue Verrastung, ist eine sehr präzise Fertigung erforderlich. Weichen die erstellten Bauteile von den Fertigungsvorgaben nur geringfügig ab, so sind häufig sehr hohe Kräfte zu Verrastung der Komponenten erforderlich. Je nach Abweichung kann sogar eine nur eingeschränkte Abdichtung die Folge sein. Große Verrastungskräfte und Fertigungstoleranzen können zudem die Positionierungsgenauigkeit der Abdichtungsvorrichtung beeinträchtigen.

Die Aufgabe der Erfindung liegt darin, eine Abdichtungsanordnung, enthaltend eine Kraftfahrzeugscheibe, bereitzustellen, welche unempfindlicher gegenüber Fertigungstoleranzen und nur geringe Kräfte zur dauerhaften und sicheren Verrastung der einzelnen Komponenten erfordert.

Die Aufgabe der vorliegenden Erfindung wird gemäß dem unabhängigen Anspruch 1 gelöst. Bevorzugte Ausführungen gehen aus den Unteransprüchen hervor.

Ein erfindungsgemäßes Verfahren zur Herstellung einer erfindungsgemäßen Abdichtungsanordnung sowie deren Verwendung gehen aus weiteren unabhängigen Ansprüchen hervor.

Die erfindungsgemäße Abdichtungsanordnung, enthaltend eine Fahrzeugscheibe, umfasst mindestens eine Halteschiene mit einem Rastkanal. Der Rastkanal wird von einer Führungsschiene und einen Federschenkel gebildet und begrenzt. Die Halteschiene ist an einer Scheibe befestigt. Die Befestigung der Halteschiene kann über einen Klebstoff oder ein Klebeband erfolgen. In einer optionalen Ausgestaltung der Erfindung kann die Kontaktfläche der Klebung vorbehandelt werden, beispielsweise mit einem Primer oder einer Plasmabehandlung der Halteschiene. Die Halteschiene fungiert als Verbindungstück zwischen Scheibe und Karosseriebauteil.

Die erfindungsgemäße Anordnung umfasst des Weiteren eine Abdeckung, insbesondere Wasserkastenabdeckung, mit einem Führungskanal, wobei der Führungskanal durch eine Rastschiene und einen Positionierungsanschlag gebildet ist. Die Führungsschiene ist im Führungskanal angeordnet, wobei gleichzeitig die Rastschiene im Rastkanal eingerastet ist und der Federschenkel mit der Rastschiene eingerastet verbunden ist. Im Führungskanal ist ein Federelement zwischen einer Anlagefläche an der Unterseite der Abdeckung und der Führungsschiene eingespannt. Das Federelement ist im Querschnitt als einzelne Lippe, bevorzugt finger- oder zungenförmig, ausgebildet. Zusammen mit der Führungsschiene dichtet das Federelement die Anlagenfläche, bevorzugt vollständig, an der Unterseite der Abdeckung zwischen dem Positionierungsanschlag und der Rastschiene ab und stützt diese gleichzeitig. Das Federelement weist bevorzugt eine hohe spezifische Steifigkeit auf. Das Federelement dichtet den Rastkanal gegenüber der äußeren Atmosphäre ab. Das Federelement wird beim Einsetzen der Rastschiene gestaucht und gegen den Positionierungsanschlag gedrückt. Zusammen mit der Führungsschiene zentriert das Federelement die Abdeckung zwischen dem Positionierungsanschlag und der Rastschiene. Eine Zentrierung über die Verrastungsanordnung aus Federschenkel und Rastschiene ist nicht mehr notwendig. Der von der Aufgabe der Zentrierung entlastete Federschenkel kann damit besonders biegsam ausgelegt sein und kann so Fertigungstoleranzen im Bereich des Führungskanals ausgleichen.

Das Federelement umfasst bevorzugt Elastomere und/oder thermoplastische Elastomere, bevorzugt Polyurethane, Polyolefine, Polysulfide, Polyepoxide und Kautschuk wie Naturkautschuk, Nitrilkautschuk (NBR) Styrol-Butadien-Kautschuk, Butadien-Acrylnitril-Kautschuk, Ethylen-Propylen-Dien-Kautschuk, Silikone wie RTV-(raumtemperturvernetzenden-Silikonkautschuk), HTV-(hochtemperturvernetzenden) Silikonkautschuk, peroxidischvernetzten-Silikonkautschuk und/oder additionsvernetzten-Silikonkautschuk Polyacrylate Styrol/Butadien-Blockcopolymere (SBS) und/oder Ethylen-Propylen-Dien-Kautschuk (EPDM).

Das Federelement ist bevorzugt als (teil-) Hohlkörper, poröser Vollkörper oder als Vollkörper ausgebildet. Die unterschiedliche Gestaltung des Federelements erlaubt eine zusätzliche Variation und Steuerung der Stabilität, des Gewichts und der Elastizität.

Das Federelement weist bevorzugt eine Shore-Härte von Shore A 40 bis Shore A 90, bevorzugt Shore A 50 bis Shore A 75 auf. Die erfindungsgemäße Shore-Härte erlaubt eine reversible aber gleichzeitig feste und dichte Abdichtung der Anlagenfläche.

Das Federelement weist bevorzugt eine Länge von 2 mm bis 8 mm, bevorzugt 3 mm bis 6 mm auf. Diese Länge ermöglicht eine optimale Abdichtung und Zentrierung des Federelements. Würde eine größere Länge gewählt, so kann die Stützwirkung nachlassen, bei einer kürzeren Länge kann die Abdichtung teilweise eingeschränkt sein. Das Federelement hat bevorzugt einen Durchmesser am Fußpunkt von 0,5 mm bis 3 mm, besonders bevorzugt 1 mm bis 2 mm. Der Fußpunkt bezeichnet den Bereich des Berührungsbereichs des Federelements mit der Führungsschiene. Das Federelement hat bevorzugt einen Durchmesser am freien Ende von 0,2 mm bis 1,5 mm, bevorzugt von 0,5 mm bis 1 mm. Die genannten Dimensionierungen verbessern besonders in Kombination mit einer Shore-Härte des Federelements von Shore A 40 bis Shore A 90 die gleichzeitig abstützende, abdichtende und vor allem zentrierende Wirkung des Federelements.

Die Halteschiene und/oder die Führungsschiene enthalten bevorzugt eine Verstärkungseinlage. Die Verstärkungseinlage erhöht die Festigkeit der Halteschiene und ermöglicht eine weitere Regulierung der Festigkeit. Die Verstärkungseinlage umfasst bevorzugt Metalle, organische Polymere oder Kompositwerkstoffe.

Der Federschenkel weist bevorzugt einen Rasthaken auf. Der Rasthaken ist bevorzugt widerhakenförmig ausgebildet und verbessert die Verrastung und Verankerung des Federschenkels mit der Rastschiene. Der Rasthaken weist bevorzugt eine abgerundete Fläche auf, welche ein einfacheres Einrasten mit der Rastschiene bei gleichzeitig hoher Stabilität gegenüber einer späteren Lösung der Verrastung beinhaltet.

Der Federschenkel und die Rastschiene werden bevorzugt (in Gegenüberstellung) parallel verrastend zueinander ausgerichtet. Die parallele Anordnung bevorzugt mit Aussparungen oder Wölbungen auf der Rastschiene sowie Rasthaken am Federschenkel verbessert überraschend die Festigkeit der Verbindung zwischen Federschenkel und Rastschiene. Die geometrische Anpassung der Aussparungen oder Wölbungen auf den Rasthaken erfolgt bevorzugt aufeinander abgestimmt. Der Rasthaken weist zum besseren Einrasten bevorzugt auf der der Rastschiene zugewandten Seite eine abgerundete Fläche auf. Die abgerundete Fläche verbessert das Einrasten und verringert den Wiederstand in Einrastrichtung.

Die Halteschiene wird bevorzugt über eine Klebeverbindung mit der Scheibe verbunden. Die Klebeverbindung ermöglicht eine einfache, stabile und haltbare Befestigung der Scheibe an der Halteschiene und über diese am Anbauteil. Die Klebeverbindung umfasst oder enthält bevorzugt Acrylatklebstoffe, Methylmethacrylatklebstoffe, Cyanacrylatklebstoffe, Polyepoxide, Silikonklebstoffe und/oder Silanvernetzende-Polymerklebstoffe sowie Gemische und/oder Copolymere davon. Die Kontaktfläche der Klebeverbindung mit der Scheibe oder Halteschiene kann optional vorbehandelt werden, beispielsweise mit einem Primer oder einer Plasmabehandlung.

Die Klebeverbindung umfasst bevorzugt ein doppelseitig klebendes Klebeband. Das doppelseitige Klebeband ermöglicht eine sehr schnelle und präzise Fixierung der Scheibe an der Halteschiene. Eine Aushärtung des Klebstoffes ist in der Regel nicht notwendig. Auch entfällt eine Dosierung der Klebung.

Der Federschenkel kann einen Metall- oder Kunststoffeinsatz, beispielsweise eine Metallfolie oder -feder, umfassen. Der Federschenkel enthält bevorzugt keinen Metall-oder Kunststoffeinsatz und erhält seine Flexibilität aus dem Material des Federschenkels selbst. Federschenkel ohne Metall- oder Kunststoffeinsatz sind besonders einfach herzustellen.

Die Rastschiene umfasst bevorzugt Aussparungen oder Wölbungen. Diese Strukturelemente ermöglichen und sichern das Einrasten und Verrasten des Federschenkels mit der Rastschiene und damit die Fixierung des Anbauteils, beispielsweise Wasserkasten, an der Scheibe. Zusätzlich erhöhen Aussparungen die Biegsamkeit der Rastschiene.

Der Federschenkel ist bevorzugt auslenkbar oder mit der Halteschiene auslenkbar verbunden. In Abhängigkeit von der Auslenkkraft kann die Verbindung zwischen Anbauteil und Scheibe reversibel oder irreversibel geschlossen werden.

Die Führungsschiene weist bevorzugt eine Stützwölbung auf, welche die Abdichtung des Rastkanals unterstützt und verbessert. Die genaue Abmessung der Stützwölbung richtet sich nach der Größe des Führungskanals und kann leicht an diesen angepasst und bei Bedarf variiert werden.

Der Positionierungsanschlag ist bevorzugt parallel zur Rastschiene angeordnet. Der Ausdruck parallel umfasst im Sinne der Erfindung auch eine gemittelte Winkelabweichung von plus/minus 15°. Die parallele Anordnung des Positionierungsanschlags verbessert die Abdichtwirkung des Federelements und die Festigkeit sowie Fixierung an der Anlagefläche.

Die Erfindung umfasst des Weiteren ein Verfahren zur Herstellung einer erfindungsgemäßen Abdichtungsanordnung. In einem ersten Schritt wird eine Halteschiene über eine Klebeverbindung mit einer Scheibe verbunden. In einem folgenden Schritt wird eine Führungsschiene innerhalb eines Führungskanals einer Abdeckung angeordnet. Parallel oder anschließend wird die Abdeckung mit einer Rastschiene in einen Rastkanal über einen Rasthaken hinaus unter Anspannung eines Federelements zwischen der Führungsschiene und einer Anlagefläche an der Unterseite der Abdeckung eingedrückt. Im abschließenden Schritt bewegt sich die Abdeckung unter Entspannung des Federelements zurück,wobei der Rasthaken an der Rastschiene eingerastet wird.

Die Erfindung umfasst des Weiteren die Verwendung einer erfindungsgemäßen Abdichtungsanordnung als Windschutzscheibe oder Heckscheibe, bevorzugt als Wasserkastenabdeckung einer Windschutzscheibe.

Im Folgenden wird die Erfindung anhand von Figuren näher erläutert. Die Figuren zeigen rein schematische Darstellungen und sind nicht maßstabsgetreu. Sie schränken die Erfindung in keiner Weise ein.

Es zeigen:
- Figur 1: einen Querschnitt der erfindungsgemäßen Abdichtungsanordnung,
- Figur 2: einen vergrößerten Querschnitt des geschlossenen Federelements und
- Figur 3: ein Fließschema des erfindungsgemäßen Verfahrens zur Herstellung der Abdichtungsanordnung.

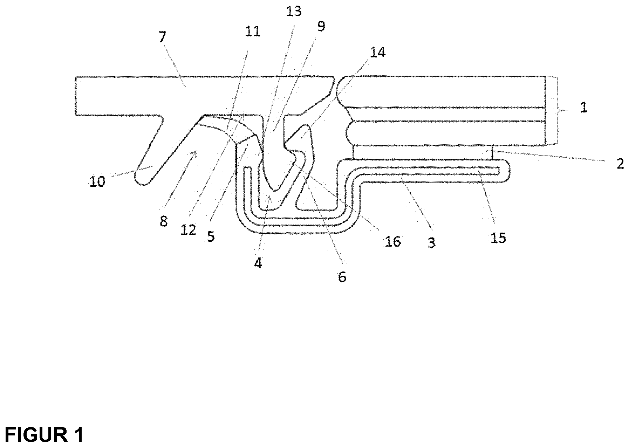

Figur 1 zeigt einen Querschnitt der erfindungsgemäßen Abdichtungsanordnung. Eine Scheibe 1, bevorzugt eine Verbundglasscheibe, ist über eine Klebeverbindung 2 mit einer Halteschiene 3 verbunden. Die Halteschiene 3 dient zur Verbindung eines Fahrzeugbauteils, bevorzugt einem Wasserkasten, mit der Scheibe 1. Die Halteschiene 3 umfasst einen Rastkanal 4, wobei der Rastkanal 4 von einer Führungsschiene 5 und einem Federschenkel 6 gebildet wird. Die Halteschiene 3 umfasst eine Verstärkungseinlage 15. Die Verstärkungseinlage umfasst bevorzugt Metalle und elastische Kunststoffe und kann optional auch die Steifigkeit der Halteschiene 3 erhöhen. Eine Abdeckung 7, bevorzugt von einem Wasserkasten, bildet mit einer Rastschiene 9 und einem Positionierungsanschlag 10 einen Führungskanal 8. Die als Teil der Halteschiene 3 ausgebildete Führungsschiene 5 ist im Führungskanal 8 angeordnet und dichtet den Führungskanal 8 mit einem Federelement 11 ab. Gleichzeitig ist die Rastschiene 9 in dem Rastkanal 4 an einem Federschenkel 6 eingerastet und sorgt für eine sichere Fixierung der Abdeckung 7. Im Führungskanal 8 ist das Federelement 11, bevorzugt im Form einer polymeren, gummihaltigen und elastischen Lippe, zwischen einer Anlagefläche 12 an der Unterseite der Abdeckung 7 und der Führungsschiene 5 eingespannt. Das Federelement 11 ist bevorzugt im Querschnitt als einzelne, fingerförmige Lippe ohne weitere Aussparungen oder Fortsätze ausgebildet. Wie oben beschrieben, dichtet das Federelement 11 gemeinsam mit der Führungsschiene 5 und bevorzugt einer Stützwölbung 13 die Anlagefläche 12 an der Unterseite der Abdeckung 7 zwischen dem Positionierungsanschlag 10 und der Rastschiene 9 ab. Gleichzeitig stützt das Federelement 11 die Abdeckung 7 auf der Rastschiene 3.

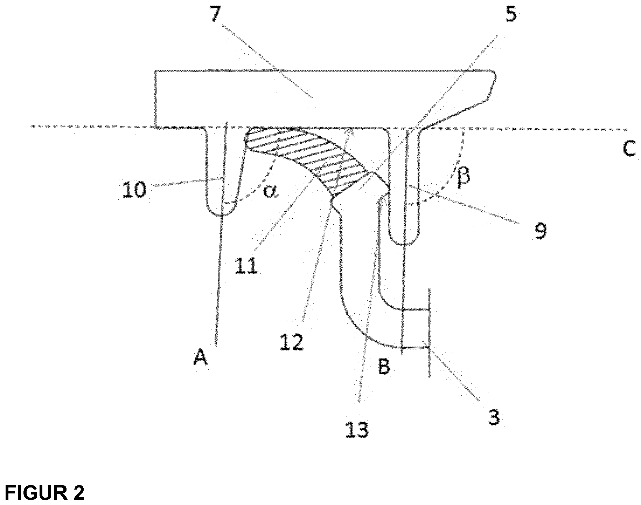

Figur 2 zeigt einen vergrößerten Querschnitt des geschlossenen Federelements. Der gezeigte Bereich der Abdeckung 7 umfasst den Positionierungsanschlag 10 und die Rastschiene 9. Die Anlagefläche 12 wird durch den Zwischenraum zwischen dem Positionierungsanschlag 10 und der Rastschiene 9 gebildet. Der Positionierungsanschlag 10 und die Rastschiene 9 sind parallel zueinander angeordnet. Parallel umfasst im Sinne der Erfindung auch eine gemittelte Winkelabweichung zwischen Anlagefläche 12 und der durch den Positionierungsanschlag 10 und die Rastschiene gedachten gemittelten Geraden A und B von bis zu 30°. Bevorzugt ist dabei eine von der Anlagefläche 12 weggerichtete sich öffnende Anordnung der Geraden A und B. Der Winkel α (alpha) zwischen der Ebene C der Anlagefläche 12 und der Geraden A beträgt daher bevorzugt von 90° bis 120°; der Winkel β (beta) zwischen der Ebene C der Anlagefläche 12 und der Geraden B beträgt bevorzugt von 60° bis 90°. Das Federelement 11 ist im Querschnitt Federelement 11 ist im Querschnitt bevorzugt finger- oder zungenförmig ausgebildet und dichtet zusammen mit der Führungsschiene 5 und der Stützwölbung 13 die Anlagefläche 12 und den in der Figur nicht gezeigten rechten Raum zwischen der Abdeckung 7 und der nicht gezeigten Scheibe 1 ab. Gleichzeitig weist das Federelement 11 bevorzugt eine Shore-Härte von Shore A 50 bis Shore A 75 sowie eine Länge von 3 mm bis 6 mm auf. Das im eingebauten Zustand gestauchte Federelement drückt gegen den Positionierungsanschlag 10 und die Rastschiene 9 und ermöglicht so eine Zentrierung ohne eigentliche Verrastung. Daneben ist das Federelement so flexibel, dass es Fertigungstoleranzen im Führungskanal ausgleichen kann.

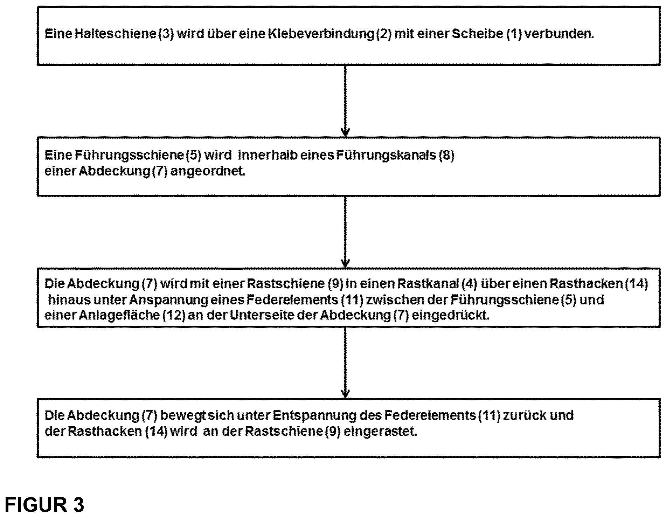

Figur 3 zeigt ein Fließschema des erfindungsgemäßen Verfahrens zur Herstellung der Abdichtungsanordnung. In einem ersten Schritt wird eine Halteschiene 3 über eine Klebeverbindung 2 in Form eines doppelseitigen Klebebandes mit einer Scheibe 1 verbunden. In einem folgenden Schritt wird eine Führungsschiene 5 innerhalb eines Führungskanals 8 zwischen einem Positionierungsanschlag 10 und einer Rastschiene 9 einer Abdeckung 7 angeordnet. Anschließend wird die Abdeckung 7 mit einer Rastschiene 9 in einen Rastkanal 4 über einen Rasthaken 14 hinaus unter Anspannung eines Federelements 11 zwischen der Führungsschiene 5 und einer Anlagefläche 12 an der Unterseite der Abdeckung 7 eingedrückt. Im abschließenden Schritt bewegt sich die Abdeckung 7 unter Entspannung des Federelements 11 zurück, wobei der Rasthaken 14 an den Aussparungen oder Wölbungen 16 der Rastschiene 9 eingerastet wird.

### Bezugszeichenliste

1 Scheibe
2 Klebeverbindung
3 Halteschiene
4 Rastkanal
5 Führungsschiene
6 Federschenkel
7 Abdeckung
8 Führungskanal
9 Rastschiene
10 Positionierungsanschlag
11 Federelement
12 Anlagefläche
13 Stützwölbung
14 Rasthaken
15 Verstärkungseinlage
16 Aussparungen oder Wölbungen

## Patentansprüche

1. Abdichtungsanordnung, enthaltend eine Fahrzeugscheibe (1), wobei die Abdichtungsanordnung mindestens umfasst:
a. eine Halteschiene (3) mit einem Rastkanal (4), wobei der Rastkanal (4) eine Führungsschiene (5) und einen Federschenkel (6) umfasst,
b. die Halteschiene (3) an der Fahrzeugscheibe (1) befestigt ist, **gekennzeichnet durch**
c. eine Abdeckung (7) mit einem Führungskanal (8), wobei der Führungskanal (8) durch eine Rastschiene (9) und einen Positionierungsanschlag (10) gebildet ist und die Führungsschiene (5) im Führungskanal (8) angeordnet ist sowie die Rastschiene (9) im dem Rastkanal (4) eingerastet ist, wobei der Federschenkel (6) mit der Rastschiene (9) eingerastet verbunden ist, wobei
d. im Führungskanal (8) ein Federelement (11) zwischen einer Anlagefläche (12) an der Unterseite der Abdeckung (7) und der Führungsschiene (5) eingespannt ist, wobei das Federelement (11) im Querschnitt als einzelne Lippe ausgebildet ist und zusammen mit der Führungsschiene (5) die Anlagefläche (12) an der Unterseite der Abdeckung (7) zwischen dem Positionierungsanschlag (10) und der Rastschiene (9) abdichtet und abstützt, wobei das Federelement (11) im eingebauten Zustand gegen den Positionierungsanschlag (10) drückt.

2. Abdichtungsanordnung nach Anspruch 1, wobei das Federelement (11) als (Teil-) Hohlkörper, poröser Vollkörper oder als Vollkörper ausgebildet ist.

3. Abdichtungsanordnung nach Anspruch 1 oder 2, wobei das Federelement (11) eine Shore-Härte von Shore A 40 bis Shore A 90, bevorzugt Shore A 50 bis Shore A 75 aufweist.

4. Abdichtungsanordnung nach einem der Ansprüche 1 bis 3, wobei das Federelement (11) eine Länge von 2 mm bis 8 mm, bevorzugt 3 mm bis 6 mm aufweist.

5. Abdichtungsanordnung nach einem der Ansprüche 1 bis 4, wobei die Halteschiene (3) und/oder die Führungsschiene (5) eine Verstärkungseinlage (15) enthält.

6. Abdichtungsanordnung nach einem der Ansprüche 1 bis 5, wobei die Halteschiene (3) über eine Klebeverbindung (2) mit der Fahrzeugscheibe (1) verbunden ist.

7. Abdichtungsanordnung nach Anspruch 6, wobei die Klebeverbindung (2) ein doppelseitiges Klebeband umfasst.

8. Abdichtungsanordnung nach einem der Ansprüche 1 bis 7 wobei der Federschenkel (6) einen Metall- oder Kunststoffeinsatz (15), bevorzugt eine Metallfolie, umfasst.

9. Abdichtungsanordnung nach einem der Ansprüche 1 bis 8, wobei der Federschenkel (6) einen Rasthaken (14) aufweist.

10. Abdichtungsanordnung nach einem der Ansprüche 1 bis 9, wobei der Federschenkel (6) und die Rastschiene parallel verrastent zueinander ausgerichtet ist.

11. Abdichtungsanordnung nach einem der Ansprüche 1 bis 10, wobei die Rastschiene (9) Aussparungen oder Wölbungen (16) aufweist.

12. Abdichtungsanordnung nach einem der Ansprüche 1 bis 11, wobei der Federschenkel (6) auslenkbar ist oder mit der Halteschiene (3) auslenkbar verbunden ist.

13. Abdichtungsanordnung nach einem der Ansprüche 1 bis 12, wobei die Führungsschiene (5) eine Stützwölbung (13) aufweist.

14. Verfahren zur Herstellung einer Abdichtungsanordnung nach einem der Ansprüche 1 bis 13, wobei mindestens,
a. eine Halteschiene (3) über eine Klebeverbindung (2) mit einer Fahrzeugscheibe (1) verbunden wird,
b. eine Führungsschiene (5) innerhalb eines Führungskanals (8) einer Abdeckung (7) angeordnet wird,
c. die Abdeckung (7) mit einer Rastschiene (9) in einen Rastkanal (4) über einen Rasthaken (14) hinaus unter Anspannung eines Federelements (11) zwischen der Führungsschiene (5) und einer Anlagefläche (12) an der Unterseite der Abdeckung (7) eingedrückt wird,
d. die Abdeckung (7) unter Entspannung des Federelements (11) sich zurück bewegt und der Rasthaken (14) an der Rastschiene (9) eingerastet wird.

15. Verwendung einer Abdichtungsanordnung nach einem der Ansprüche 1 bis 13 für eine Windschutzscheibe oder Heckscheibe, bevorzugt als Wasserkastenabdeckung einer Windschutzscheibe.

## Claims

1. Sealing arrangement, comprising a vehicle window pane (1), the sealing arrangement comprising at least:
a) a holding rail (3) with a latching channel (4), wherein the latching channel (4) comprises a guide rail (5) and a spring leg (6),
b) the holding rail (3) is affixed on the vehicle window pane (1),
**characterized in**
c) a cover (7) with a guide channel (8), wherein the guide channel (8) is formed by a latching rail (9) and a positioning stop (10) and the guide rail (5) is arranged in the guide channel (8) and the latching rail (9) is engaged in the latching channel (4), wherein the spring leg (6) is latch connected to the latching rail (9), wherein
d) in the guide channel (8), a spring element (11) is tensioned between a contact surface (12) on the underside of the cover (7) and the guide rail (5), wherein the spring element (11) is configured as a single lip in cross-section and, together with the guide rail (5), seals and supports the contact surface (12) on the underside of the cover (7) between the positioning stop (10) and the latching rail (9), wherein the spring element (11) presses in the installed state against the positioning stop (10).

2. Sealing arrangement according to claim 1, wherein the spring element (11) is implemented as a (partially) hollow body, a porous solid body, or as a solid body.

3. Sealing arrangement according to claim 1 or 2, wherein the spring element (11) has a Shore hardness from Shore A 40 to Shore A 90, preferably Shore A 50 to Shore A 75.

4. Sealing arrangement according to one of claims 1 through 3, wherein the spring element (11) has a length of 2 mm to 8 mm, preferably 3 mm to 6 mm.

5. Sealing arrangement according to one of claims 1 through 4, wherein the holding rail (3) and/or the guide rail (5) includes a reinforcing insert (15).

6. Sealing arrangement according to one of claims 1 through 5, wherein the holding rail (3) is bonded to the vehicle window pane (1) via an adhesive bond (2).

7. Sealing arrangement according to claim 6, wherein the adhesive bond (2) comprises a double-sided adhesive tape.

8. Sealing arrangement according to one of claims 1 through 7, wherein the spring leg (6) includes a metal or plastic insert (15), preferably a metal foil.

9. Sealing arrangement according to one of claims 1 through 8, wherein the spring leg (6) has a latch hook (14).

10. Sealing arrangement according to one of claims 1 through 9, wherein the spring leg (6) and the latching rail are aligned locked parallel to each other.

11. Sealing arrangement according to one of claims 1 through 10, wherein the latching rail (9) has recesses or bulges (16)

12. Sealing arrangement according to one of claims 1 through 11, wherein the spring leg (6) is deflectable or is deflectably connected to the holding rail (3).

13. Sealing arrangement according to one of claims 1 through 12, wherein the guide rail (5) has a supporting bulge (13).

14. Method for producing a sealing arrangement according to one of claims 1 through 13, wherein at least,
a. a holding rail (3) is bonded to a vehicle window pane (1) via an adhesive bond (2),
b. a guide rail (5) is arranged within a guide channel (8) of a cover (7),
c. the cover (7) is pressed in with a latching rail (9) into a latching channel (4) beyond a latch hook (14) under tensioning of a spring element (11) between the guide rail (5) and a contact surface (12) on the underside of the cover (7),
d. the cover (7) is moved back under relaxation of the spring element (11) and the latch hook (14) is engaged on the latching rail (9).

15. Use of a sealing arrangement according to one of claims 1 through 13 for a windshield or rear window, preferably as a water box cover of a windshield.

## Revendications

1. Dispositif d'étanchéité comprenant une vitre de véhicule (1), le dispositif d'étanchéité comprenant au moins :
a. un rail de support (3) avec un canal d'enclenchement (4), où le canal d'enclenchement (4) comprend un rail de guidage (5) et une branche de ressort (6),
b. le rail de support (3) est fixé sur la vitre de véhicule (1),
**caractérisé par**
c. un couvercle (7) avec un canal de guidage (8), où le canal de guidage (8) est formé par un rail d'enclenchement (9) et une butée de position (10) et le rail de guidage (5) est disposé sur le canal de guidage (8) et le rail d'enclenchement (9) est enclenché dans le canal d'enclenchement (4), où la branche de ressort (6) est reliée au rail d'enclenchement (9), où
d. un élément de ressort (11) est serré dans le canal de guidage (8) entre une surface de contact (12) sur le dessous du couvercle (7) et le rail de guidage (5), où l'élément de ressort (11) est formé en section transversale comme lèvre individuelle et, avec ensemble avec le rail de guidage (5), rend la surface de contact (12) sur le dessous du couvercle (7) entre la butée de positionnement (10) et le rail d'enclenchement (9) étanche et la soutient, où l'élément de ressort (11) à l'état installé s'appuie contre la butée de positionnement (10).

2. Dispositif d'étanchéité selon la revendication 1, où l'élément de ressort (11) est formé comme corps creux (partiel), corps plein poreux ou comme corps plein.

3. Dispositif d'étanchéité selon la revendication 1 ou 2, où l'élément de ressort (11) présente une dureté Shore entre Shore A 40 et Shore A90, de préférence entre Shore A50 et Shore A75.

4. Dispositif d'étanchéité selon l'une des revendications 1 à 3, où l'élément de ressort (11) présente une longueur de 2 mm à 8 mm de préférence de 3 mm à 6 mm.

5. Dispositif d'étanchéité selon l'une des revendications 1 à 4, où le rail de support (3) ou le rail de guidage (5) contient une garniture de renforcement (15).

6. Dispositif d'étanchéité selon l'une des revendications 1 à 5, où le rail de support peut être connecté à la vitre (1) par liaison adhésive (2).

7. Dispositif d'étanchéité selon la revendication 6, où la liaison adhésive (2) comprend un ruban adhésif double-face.

8. Dispositif d'étanchéité selon l'une des revendications 1 à 7 où la branche de ressort (6) comprend un insert en métal ou en matière synthétique (15), de préférence un film métallique.

9. Dispositif d'étanchéité selon l'une des revendications 1 à 8, où la branche de ressort (6) présente un crochet d'enclenchement (14).

10. Dispositif d'étanchéité selon l'une des revendications 1 à 9, où la branche de ressort (6) et le rail d'enclenchement sont alignés en enclenchement parallèle l'une par rapport à l'autre.

11. Dispositif d'étanchéité selon l'une des revendications 1 à 10, où le rail d'enclenchement (9) présente des découpes ou des courbures (16).

12. Dispositif d'étanchéité selon l'une des revendications 1 à 11, où la branche de ressort (6) peut être déviée ou est connecté avec le rail de support (3) de manière à pouvoir être déviée.

13. Dispositif d'étanchéité selon l'une des revendications 1 à 12, où le rail de guidage (5) a une courbure de soutien (13).

14. Méthode de fabrication d'un dispositif d'étanchéité selon l'une des revendications 1 à 13, où au moins,
a. un rail de support (3) est relié à une vitre (1) par une liaison adhésive (2),
b. un rail de guidage (5) est disposé dans un canal de guidage (8) d'un couvercle (7),
c. avec un rail d'enclenchement (9) le couvercle (7) est appuyé dans un canal d'enclenchement (4) au delà d'un crochet d'enclenchement (14) sous la tension d'un élément de ressort (11) entre le rail de guidage (5) et une surface de contact (12) sur le dessous du couvercle (7),
d. lors de la détente de l'élément de ressort (11) le couvercle (7) se déplace en arrière et le crochet d'enclenchement (14) s'enclenche sur le rail d'enclenchement (9).

15. Utilisation d'un dispositif d'étanchéité selon l'une des revendications 1 à 13 comme pare-brise ou lunette arrière, de préférence, comme couverture d'un compartiment à eau d'un pare-brise.
